# EUROPEAN PATENT APPLICATION

(11) **EP 4 371 889 A1**
(43) Date of publication of application: **22.05.2024**
(21) Application number: 23209374.0
(22) Date of filing: 13.11.2023
(51) Int. Cl.: B64F 5/40, G06Q 10/20, B64F 5/60, G07C 5/00

(54) **SYSTEMS AND METHODS FOR COORDINATING MAINTENANCE OPERATIONS FOR AIRCRAFT**

(30) Priority: 15.11.2022 US 202218055475
(71) Applicant: The Boeing Company, Arlington, VA 22202 (US)
(72) Inventor: GRÖNKVIST, Åke Mattias, Arlington, 22202 (US); FORSMAN, Anders, Arlington, 22202 (US)
(74) Representative: Boult Wade Tennant LLP

(57) **Abstract**

A system and a method include a maintenance coordination control unit configured to receive one or more health signals from one or more health management sub-systems of one or more aircraft. The one or more health signals include one or more tail assignments and one or more maintenance issues for the one or more aircraft. The maintenance coordination control unit is further configured to schedule one or more maintenance operations for the one or more aircraft. The one or more maintenance operations are configured to remedy the one or more maintenance issues.

## Description

### FIELD OF THE DISCLOSURE

Examples of the present disclosure generally relate to systems and methods for coordinating maintenance operations for aircraft.

### BACKGROUND OF THE DISCLOSURE

Aircraft are used to transport passengers and cargo between various locations. Numerous aircraft depart from and arrive at a typical airport every day.

Each aircraft has a specific tail number, which provides a unique identification for the aircraft. The aircraft typically travel according to various planned flights, such as in a day, week, month, etc. Each flight has a specific flight number. An aircraft tail assignment combines a tail number for an aircraft with a particular flight number. Each flight of an aircraft typically has a different tail assignment. For example, a flight from New York to Chicago has a tail assignment that includes the tail number for the aircraft with a flight number associated with the trip from New York to Chicago. A flight of the aircraft from Chicago to Seattle has the same tail number, but a different flight number. An aircraft operator provides a schedule for all flights of all aircraft.

During operation, an aircraft may experience one or more maintenance issues. For example, climate control systems within an internal cabin may not provide sufficient cooling or heating. As another example, a lavatory within the internal cabin may not have access to a desired amount of water. When such issues arise, the aircraft is then scheduled for maintenance at a particular location. However, the maintenance operation can interfere with the schedule for the aircraft. That is, the maintenance operation may prevent the aircraft from flying a particular scheduled flight.

In response to maintenance issues, one or more individuals typically need to manually determine and schedule a maintenance operation, and then also manually revise the schedule for the aircraft, which can also affect the schedules of various other aircraft. As can be appreciated, the process of manually determining and rescheduling schedules for aircraft is time and labor intensive, and can often be overwhelming considering the cascading effect on numerous other aircraft.

### SUMMARY OF THE DISCLOSURE

A need exists for a system and a method for efficiently and effectively coordinating maintenance operations for an aircraft. Further, a need exists for a system and a method for efficiently and effectively revising a schedule of flights for one or more aircraft in response to a maintenance operation.

With those needs in mind, certain examples of the present disclosure provide a system including a maintenance coordination control unit configured to receive one or more health signals from one or more health management sub-systems of one or more aircraft. The one or more health signals include one or more tail assignments and one or more maintenance issues for the one or more aircraft. The maintenance coordination control unit is further configured to schedule one or more maintenance operations for the one or more aircraft. The one or more maintenance operations are configured to remedy the one or more maintenance issues.

In at least one example, the maintenance coordination control unit is further configured to revise one or more tail assignments of the one or more aircraft to accommodate the one or more maintenance operations.

The one or more aircraft can include all of the aircraft of an airline. As another example, the one or more aircraft include all of the aircraft of a plurality of airlines.

In at least one example, a maintenance issue database stores data regarding the maintenance issues. The maintenance coordination control unit is in communication with the maintenance issue database.

In at least one example, a tail assignment database stores tail assignments for the one or more aircraft. The maintenance coordination control unit is in communication with the tail assignment database.

In at least one example, the one or more health management sub-systems include one or more sensors configured to monitor one or more aspects of one or more components of the one or more aircraft.

In at least one example, the one or more aircraft can be automatically operated in response to the maintenance coordination control unit scheduling the one or more maintenance operations.

In at least one example, the maintenance coordination control unit is further configured to determine one or more costs for the one or more maintenance issues.

The maintenance coordination control unit can be an artificial intelligence or machine learning system.

Certain examples of the present disclosure provide a method including receiving, by a maintenance coordination control unit, one or more health signals from one or more health management sub-systems of one or more aircraft, wherein the one or more health signals include one or more tail assignments and one or more maintenance issues for the one or more aircraft; and scheduling, by the maintenance coordination control unit, one or more maintenance operations for the one or more aircraft, wherein the one or more maintenance operations are configured to remedy the one or more maintenance issues.

Certain examples of the present disclosure provide a non-transitory computer-readable storage medium comprising executable instructions that, in response to execution, cause one or more control units comprising a processor, to perform operations comprising: receiving one or more health signals from one or more health management sub-systems of one or more aircraft, wherein the one or more health signals include one or more tail assignments and one or more maintenance issues for the one or more aircraft; scheduling one or more maintenance operations for the one or more aircraft, wherein the one or more maintenance operations are configured to remedy the one or more maintenance issues; and revising one or more tail assignments of the one or more aircraft to accommodate the one or more maintenance operations.

### BRIEF DESCRIPTION OF THE DRAWINGS

Figure 1 illustrates a schematic block diagram of a system for coordinating maintenance operations for aircraft.
Figure 2 illustrates a flow chart of a method for coordinating maintenance operations for aircraft.
Figure 3 illustrates a schematic block diagram of a maintenance coordination control unit.
Figure 4 illustrates a perspective front view of an aircraft.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide a system for coordinating maintenance operations and flight schedules for aircraft. In at least one example, the systems and methods integrate aircraft health management (for example, the ability of an aircraft to diagnose and report operational issues during operation) with tail assignment for aircraft (that is, the routing of aircraft in an airline network of flights). Aircraft which report operational issues requiring maintenance are automatically re-routed over a predetermined time period (for example, one or more days) to a maintenance location where the issue can be fixed.

Airplane health management sub-systems can detect and automatically (that is, without human intervention) report when aircraft experience issues and deficiencies during operation. When an aircraft reports an issue that (a) affects its ability to operate flights (for example, a broken global positioning system, which may prevent flight over water), (b) requires maintenance within a number of hours/cycles (for example, a worn landing gear warning), and/or (c) is mostly inconvenient (for example, a broken bathroom door lock), countermeasures are automatically (that is, without human intervention) determined, and the flights assigned to the aircraft in the next few hours/days are automatically (that is, without human intervention) re-planned to ensure that they are all operable by the aircraft (for example, over-water flights can be assigned to other aircraft) while also ensuring that any necessary maintenance visit is planned as necessary. If a maintenance issue is not necessary, but simply desired to be fixed (for example, a broken bathroom door lock), the maintenance issue can be assigned a cost and planned if possible, or as soon as possible in case it can be postponed.

In at least one example, one or more control units, such as a maintenance coordination control unit, determines one or more maintenance actions to recommend. In at least one example, the maintenance coordination control unit and/or an additional control unit determines and/or revises tail assignments based on changes in a schedule.

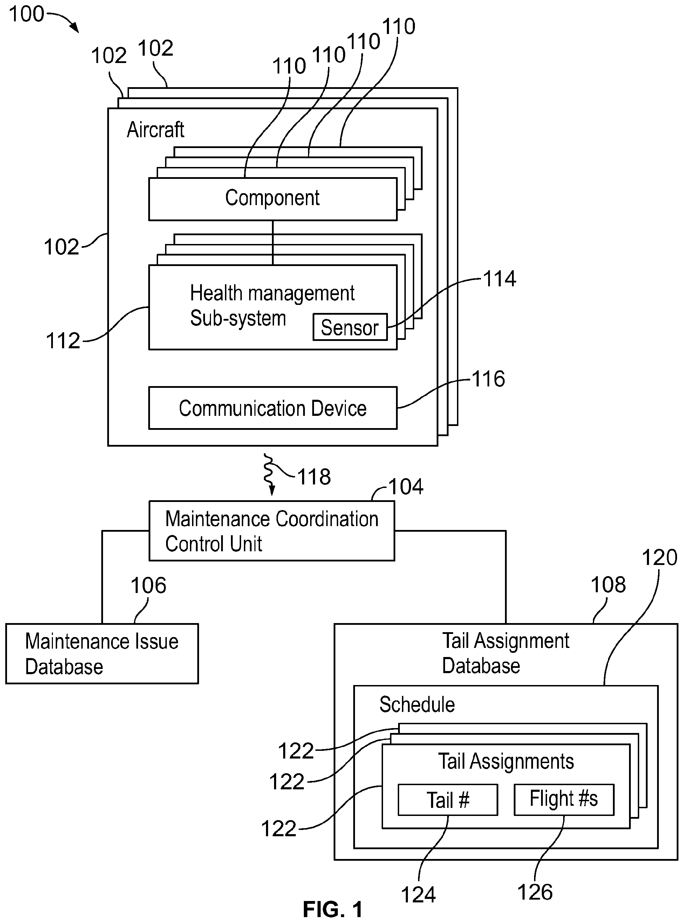

Figure 1 illustrates a schematic block diagram of a system 100 for coordinating maintenance operations for aircraft 102, according to an example of the present disclosure. The system 100 includes a maintenance coordination control unit 104 in communication with the aircraft 102. The maintenance coordination control unit 104 can be in communication with one or more of the aircraft 102. For example, the maintenance coordination control unit 104 can be in communication with all aircraft 102 operated by a particular airline (for example, an entity that operatively controls a fleet of aircraft that fly between numerous airports). As another example, the maintenance coordination control unit 104 can be in communication with all aircraft 102 operated by numerous or even all airlines.

The maintenance coordination control unit 104 is also in communication with a maintenance issue database 106, such as through one or more wired or wireless connections. For example, the maintenance coordination control unit 104 and the maintenance issue database 106 can be remotely located from one another, and can be in communication through a private or public network, such as the Internet. As another example, the maintenance coordination control unit 104 and the maintenance issue database 106 can be co-located, and in communication with one or more wired connections.

The maintenance coordination control unit 104 is also in communication with a tail assignment database 108, such as through one or more wired or wireless connections. For example, the maintenance coordination control unit 104 and the tail assignment database 108 can be remotely located from one another, and can be in communication through a private or public network, such as the Internet. As another example, the maintenance coordination control unit 104 and the tail assignment database 108 can be co-located, and in communication with one or more wired connections.

Each aircraft 102 includes numerous components 110, such as a propulsion system, a navigation system, a flight computer, operational controls, lavatories, and the like. A health management sub-system 112 is associated with a respective component 110. The health management sub-system 112 includes one or more sensors 114 configured to monitor one or more aspects of a component 110. For example, a sensor 114 can be a thermometer configured to detect a temperature of a portion of an engine. As another example, a sensor 114 can be a water monitor configured to detect a water level of a water reservoir of a lavatory. As another example, a sensor 114 can be a signal monitor for a global positioning system (GPS). As another example, a sensor 114 can be an encoder configured to detect a number of operational actions of a landing gear. The preceding are merely examples, and the health management sub-systems 112 can include various other sensors 114 configured to detect various other aspects of various other components 110 of the aircraft 102.

The health management sub-system 112 are in communication with a communication device 116 of the aircraft, such as through one or more wired or wireless connections. The communication device 116 can be an antenna, transceiver, or the like configured to receive and transmit communication signals. In at least one example, the communication device 116 can be part of, or otherwise in communication with a flight computer of the aircraft 102. The maintenance coordination control unit 104 is in communication with the aircraft 102 through the communication device 116. As such, the maintenance coordination control unit 104 receives health signals from the health management sub-systems 112.

In operation, the sensor(s) 114 of the health management sub-systems 112 of an aircraft 102 monitor a health status of an associated component 110. If a maintenance issue arises with the component 110, the sensor(s) 114 output a health signal 118 indicative of the maintenance issue to the maintenance coordination control unit 104. The health signal 118 includes the tail assignment for the aircraft 102 as well as the maintenance issue. As such, the health signal 118 automatically identifies the aircraft 102 through the tail assignment (which includes the tail number for the aircraft 102, as well as the flight number related to when the maintenance issue arises), and the maintenance issue detected by the health management sub-system 112. For example, a sensor 114 can detect a temperature of a portion of an engine that exceeds a predetermined temperature threshold. As another example, a sensor 114 for a navigation sub-system of the aircraft 102 can detect an anomaly with a global positioning system. As another example, a sensor 114 of a lavatory can detect a faulty lock. As another example, a sensor 114 of a water tank can detect a water level below a predetermined threshold. Such issues are combined with the tail assignment for the aircraft 102 in the health signal 118, which is received by the maintenance coordination control unit 104.

In response to receiving the health signal 118 indicating a maintenance issue from a health management sub-system 112 of the aircraft 102, the maintenance coordination control unit 104 compares the maintenance issue included within the health signal 118 with data regarding maintenance issues stored in the maintenance issue database 106. In particular, the maintenance issue database includes data including a location for fixing the maintenance issue, as well as length of time for fixing the maintenance issue. In this manner, the maintenance coordination control unit 104 is able to receive the health signal 118 for the aircraft 102 and automatically determine (without human intervention) the necessary location and/or time period for fixing the maintenance issue.

After the maintenance coordination control unit 104 determines the necessary maintenance operation (including the location and time period for fixing the maintenance issue) from the health signal 118 received from the aircraft 102 and the data within the maintenance issue database 106, the maintenance coordination control unit 104 analyzes a schedule for the aircraft 102 that is in need of maintenance. For example, the tail assignment database 108 includes a schedule 120 that includes tail assignments for the aircraft 102 and various other aircraft 102. The tail assignments 122 include a tail number 124 that identifies a particular aircraft and flight numbers 126 for the particular aircraft. For example, a tail assignment 122 for aircraft A123 for a flight between Chicago and New York can be A123 (tail number) - F3204 (flight number). A tail assignment for the same aircraft for a flight from New York to Fort Lauderdale can be A123-F1 111. The schedule 120 includes the various tail assignments for each aircraft 102 over a particular time period, such as a day, a week, a month, or longer.

However, the maintenance issue as detected by the health management sub-system 112 and output to the maintenance coordination control unit 104 via the health signal 118 (which can include the current tail assignment for the aircraft 102 and the maintenance issue) can affect the schedule 120. For example, based on the maintenance issue contained with the health signal 118 and compared with the data in the maintenance issue database 106, the maintenance coordination control unit 104 can determine that a maintenance operation prevents the aircraft 102 from flying a particular flight. As such, the maintenance coordination control unit 104 can then automatically schedule (without human intervention) a maintenance operation for the aircraft 102 to fix the particular maintenance issue, and revise the schedule 120 for the aircraft 102, as well as other aircraft 102 that can be affected by the re-scheduling. For example, the maintenance coordination control unit 104 can review the tail assignments 122 for various other aircraft 102 and determine that another aircraft 102 can be used to fly a particular flight number 126 in place of the aircraft 102 that is scheduled for maintenance. The maintenance coordination control unit 104 continually receives health signals 118 from numerous aircraft, automatically schedules (without human intervention) any necessary maintenance, and automatically revises (without human intervention) the schedule based on scheduled maintenance operations for the various aircraft 102.

As an example, the health signal 118 output by a health management sub-system 112 of a particular aircraft 102 indicates that a water level of a water tank for a lavatory is below a predetermined threshold. The maintenance coordination control unit 104 compares the health signal 118 with data stored in the maintenance issue database 106 and determines that until the water of the water tank is fully replenished, the aircraft 102 cannot fly a flight longer than two hours, and that the issue needs to be fixed within three days. Accordingly, the maintenance coordination control unit 104 then analyzes the tail assignments 122 of the particular aircraft, and de-assigns (for example, tail swaps) any flights exceeding two hours over the next three days. At the same time, the maintenance coordination control unit 104 then schedules a maintenance operation for the aircraft 102 to remedy (for example, fix, alleviate, or otherwise address) the maintenance issue, and may also substitute one or more aircraft 102 for the flights of the aircraft 102 in need of maintenance that were canceled. The maintenance coordination control unit 104 performs such operations for numerous aircraft 102, such as all aircraft of a particular airline and/or airlines over a time period of the schedule 120, which can be a day, a week, a month, a year, or the like.

In at least one example, in response to the schedule 120 being revised by the maintenance coordination control unit 104, one or more of the aircraft 102 can be automatically operated based on the revised schedule 120. For example, when the maintenance coordination control unit 104 schedules maintenance, the aircraft 102 for which maintenance is scheduled can be automatically operated to travel to the location for the maintenance. In at least one example, the maintenance coordination control unit 104 can take control of the aircraft 102 to operate the aircraft 102 to travel to the location for the maintenance. Optionally, the aircraft 102 are not automatically operated based on the revised schedule 120.

As described herein, in response to a health management sub-system 112 reporting a maintenance issue (via a health signal 118) that (a) affects an ability of an aircraft 102 to operate flights (for example, a broken global positioning system, which may prevent flight over water), (b) requires maintenance within a number of hours/cycles (for example, a worn landing gear warning), and/or (c) is mostly inconvenient (for example, a broken bathroom door lock), the maintenance coordination control unit 104 automatically determines countermeasures, and the flights assigned to the aircraft 102 in the next few hours/days are automatically re-planned by the maintenance coordination control unit 104 to ensure that flights are all operable by the aircraft (for example, over-water flights can assigned to other aircraft) while also ensuring that any necessary maintenance visit is planned as necessary. If a maintenance issue is not necessary, but simply desired to be fixed (for example, a broken bathroom door lock), the maintenance coordination control unit 104 can assign a cost for the maintenance issue. The cost can be determined through analysis of cost data associated with the maintenance issue, as stored in the maintenance issue database. The cost can include a time and monetary value (for example, the monetary value of an aircraft not flying a previously scheduled flight) with respect to times for fixing the maintenance issue (such as fixing the maintenance issue as soon as possible, and delaying the maintenance operation for a particular period of time). The maintenance coordination control unit 104 can output a signal including data regarding the maintenance issue(s) and associated cost(s) to a user interface, such as a computer system, of an operator of the aircraft 102.

As described herein, the system 100 includes the maintenance coordination control unit 104, which is configured to receive one or more health signals 118 from one or more health management sub-systems 112 of one or more aircraft 102. The one or more health signals 118 include one or more tail assignments and one or more maintenance issues for the one or more aircraft 102. The maintenance coordination control unit 104 is further configured to schedule one or more maintenance operations for the one or more aircraft 102. The maintenance operation(s) are configured to remedy the maintenance issue(s). In at least one example, the maintenance coordination control unit 104 is further configured to revise one or more tail assignments 122 of the one or more aircraft 102 (such as within a schedule 120) to accommodate the one or more maintenance operations. The maintenance coordination control unit 104 ensures that the revised tail assignments 122 allow for the maintenance operations. The maintenance coordination control unit 104 ensures that the scheduled maintenance operations fit within the revised schedule 120.

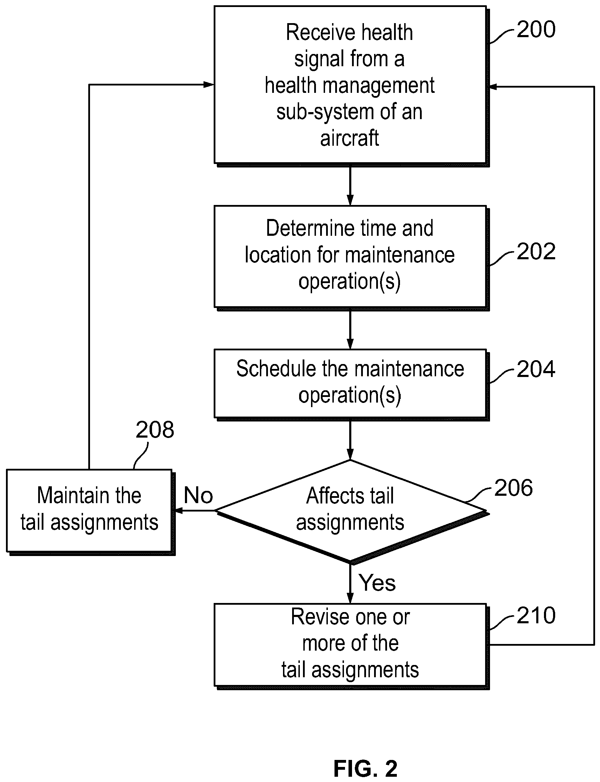

Figure 2 illustrates a flow chart of a method for coordinating maintenance operations for aircraft, according to an example of the present disclosure. Referring to Figures 1 and 2, at 200, the maintenance coordination control unit 104 receives one or more health signals 118 from one or more health management sub-systems 112 of one or more aircraft 102. At 202, the maintenance coordination control unit 104 then determines times and locations for maintenance operations for any maintenance issues included in the health signals 118. For example, the maintenance coordination control unit 104 compares the maintenance issues within the health signals 118 with data stored in the maintenance issue database 106. At 204, the maintenance coordination control unit 104 then schedules the maintenance operation(s) for the one or more aircraft 102.

At 206, the maintenance coordination control unit 104 determines if the scheduled maintenance operations affect the tail assignments 122 for the various aircraft 102. If not (such as if the maintenance operations can be performed between scheduled flights of the aircraft 102), the method proceeds from 206 to 208, at which the maintenance coordination control unit 104 maintains the previously scheduled tail assignments 208 within the schedule 120, and the method returns to 200.

If, however, the maintenance operations do affect one or more of the tail assignments 122 (such as if a maintenance operation for an aircraft 102 is to be performed at the time of a previously scheduled flight of that particular aircraft 102), the method proceeds from 206 to 210, at which the maintenance coordination control unit 104 revises one or more of the tails assignments 122 for one or more of the aircraft 102. The method then returns to 200.

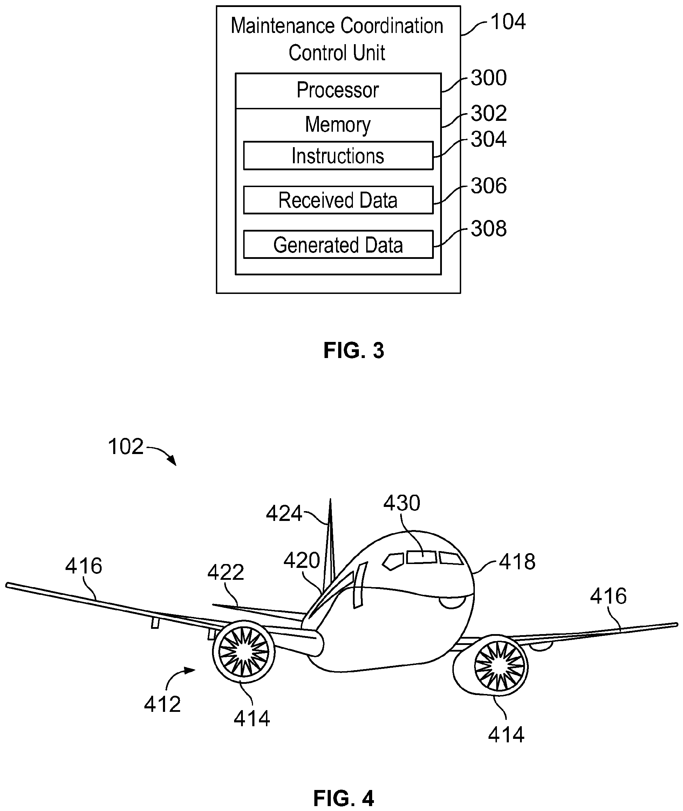

Figure 3 illustrates a schematic block diagram of the maintenance coordination control unit 104, according to an example of the present disclosure. In at least one example, the maintenance coordination control unit 104 includes at least one processor 300 in communication with a memory 302. The memory 302 stores instructions 304, received data 306, and generated data 308. The maintenance coordination control unit 104 shown in Figure 3 is merely exemplary, and nonlimiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, a quantum computer, and any other circuit or processor including hardware, software, or a combination thereof capable of executing the functions described herein. Such are exemplary only, and are thus not intended to limit in any way the definition and/or meaning of such terms. For example, the maintenance coordination control unit 104 may be or include one or more processors that are configured to control operation, as described herein.

The maintenance coordination control unit 104 is configured to execute a set of instructions that are stored in one or more data storage units or elements (such as one or more memories), in order to process data. For example, the maintenance coordination control unit 104 may include or be coupled to one or more memories. The data storage units may also store data or other information as desired or needed. The data storage units may be in the form of an information source or a physical memory element within a processing machine.

The set of instructions may include various commands that instruct the maintenance coordination control unit 104 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the maintenance coordination control unit 104. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the maintenance coordination control unit 104 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include features of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-3, examples of the subject disclosure provide systems and methods that allow large amounts of data to be quickly and efficiently analyzed by a computing device. For example, the maintenance coordination control unit 104 can analyze health signals 118 received from hundreds, thousands, or more aircraft 102, tail assignments 122 for such aircraft 102, schedule any maintenance operations for such aircraft 102, and revise numerous tail assignments 122 accordingly in real time The vast amounts of data are efficiently organized and/or analyzed by the maintenance coordination control unit 104, as described herein. The maintenance coordination control unit 104 analyzes the data in a relatively short time in order to quickly and efficiently determine maintenance issues, schedule appropriate maintenance operations, and revise tail assignments when necessary.

In at least one example, components of the system 100, such as the maintenance coordination control unit 104, provide and/or enable a computer system to operate as a special computer system for scheduling maintenance operations and revising tail assignments. The maintenance coordination control unit 104 improves upon standard computing devices by coordinating maintenance operations, revising schedules, and the like in an efficient and effective manner.

In at least one example, all or part of the systems and methods described herein may be or otherwise include an artificial intelligence (AI) or machine-learning system that can automatically perform the operations of the methods also described herein. For example, the maintenance coordination control unit 104 can be an artificial intelligence or machine learning system. These types of systems may be trained from outside information and/or self-trained to repeatedly improve the accuracy with how data is analyzed to determine if and when maintenance operations are needed, schedule such operations, and revise tail assignments in response thereto. Over time, these systems can improve by determining and coordinating maintenance operations and revising schedules with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the maintenance operations and scheduling. The training minimizes conflicts and interference by performing an iterative training algorithm, in which the systems are retrained with an updated set of data (for example, data received in real time from numerous aircraft) and based on the feedback examined prior to the most recent training of the systems. This provides a robust analysis model that can better coordinate maintenance operations and schedule revisions.

Figure 4 illustrates a perspective front view of an aircraft 102, according to an example of the present disclosure. The aircraft 102 includes a propulsion system 412 that includes engines 414, for example. Optionally, the propulsion system 412 may include more engines 414 than shown. The engines 414 are carried by wings 416 of the aircraft 102. In other examples, the engines 414 may be carried by a fuselage 418 and/or an empennage 420. The empennage 420 may also support horizontal stabilizers 422 and a vertical stabilizer 424. The fuselage 418 of the aircraft 102 defines an internal cabin 430, which includes a flight deck or cockpit, one or more work sections (for example, galleys, personnel carry-on baggage areas, and the like), one or more passenger sections (for example, first class, business class, and coach sections), one or more lavatories, and/or the like. Figure 4 shows an example of an aircraft 102. It is to be understood that the aircraft 102 can be sized, shaped, and configured differently than shown in Figure 4.

Further, the disclosure comprises examples according to the following clauses:
Clause 1. A system comprising: a maintenance coordination control unit configured to: receive one or more health signals from one or more health management sub-systems of one or more aircraft, wherein the one or more health signals include one or more tail assignments and one or more maintenance issues for the one or more aircraft; and schedule one or more maintenance operations for the one or more aircraft, wherein the one or more maintenance operations are configured to remedy the one or more maintenance issues.
Clause 2. The system of Clause 1, wherein the maintenance coordination control unit is further configured to revise one or more tail assignments of the one or more aircraft to accommodate the one or more maintenance operations.
Clause 3. The system of Clauses 1 or 2, wherein the one or more aircraft include all of the aircraft of an airline.
Clause 4. The system of Clauses 1 or 2, wherein the one or more aircraft include all of the aircraft of a plurality of airlines.
Clause 5. The system of any of Clauses 1-4, further comprising a maintenance issue database that stores data regarding the maintenance issues, wherein the maintenance coordination control unit is in communication with the maintenance issue database.
Clause 6. The system of any of Clauses 1-5, further comprising a tail assignment database that stores tail assignments for the one or more aircraft, wherein the maintenance coordination control unit is in communication with the tail assignment database.
Clause 7. The system of any of Clauses 1-6, wherein the one or more health management sub-systems comprise one or more sensors configured to monitor one or more aspects of one or more components of the one or more aircraft.
Clause 8. The system of any of Clauses 1-7, wherein the one or more aircraft are automatically operated in response to the maintenance coordination control unit scheduling the one or more maintenance operations.
Clause 9. The system of any of Clauses 1-8, wherein the maintenance coordination control unit is further configured to determine one or more costs for the one or more maintenance issues.
Clause 10. The system of any of Clauses 1-9, wherein the maintenance coordination control unit is an artificial intelligence or machine learning system.
Clause 11. A method comprising: receiving, by a maintenance coordination control unit, one or more health signals from one or more health management sub-systems of one or more aircraft, wherein the one or more health signals include one or more tail assignments and one or more maintenance issues for the one or more aircraft; and scheduling, by the maintenance coordination control unit, one or more maintenance operations for the one or more aircraft, wherein the one or more maintenance operations are configured to remedy the one or more maintenance issues.
Clause 12. The method of Clause 11, further comprising revising, by the maintenance coordination control unit, one or more tail assignments of the one or more aircraft to accommodate the one or more maintenance operations.
Clause 13. The method of Clauses 11 or 12, wherein the one or more aircraft include all of the aircraft of one or more airlines.
Clause 14. The method of any of Clauses 11-13, further comprising: storing, in a maintenance issue database, data regarding the maintenance issues; and communicatively coupling the maintenance coordination control unit with the maintenance issue database.
Clause 15. The method of any of Clauses 11-14, further comprising: storing, in a tail assignment database, tail assignments for the one or more aircraft; and communicatively coupling the maintenance coordination control unit with the tail assignment database.
Clause 16. The method of any of Clauses 11-15, further comprising monitoring, by one or more sensors of the one or more health management sub-systems, one or more aspects of one or more components of the one or more aircraft.
Clause 17. The method of any of Clauses 11-16, further comprising automatically operating the one or more aircraft in response to said scheduling.
Clause 18. The method of any of Clauses 11-17, further comprising determining, by the maintenance coordination control unit, one or more costs for the one or more maintenance issues.
Clause 19. The method of any of Clauses 11-18, wherein the maintenance coordination control unit is an artificial intelligence or machine learning system.
Clause 20. A non-transitory computer-readable storage medium comprising executable instructions that, in response to execution, cause one or more control units comprising a processor, to perform operations comprising: receiving one or more health signals from one or more health management sub-systems of one or more aircraft, wherein the one or more health signals include one or more tail assignments and one or more maintenance issues for the one or more aircraft; scheduling one or more maintenance operations for the one or more aircraft, wherein the one or more maintenance operations are configured to remedy the one or more maintenance issues; and revising one or more tail assignments of the one or more aircraft to accommodate the one or more maintenance operations.

As described herein, examples of the present disclosure provide systems and methods for efficiently and effectively coordinating maintenance operations for aircraft. Further, examples of the present disclosure provide systems and methods for efficiently and effectively revising a schedule of flights for one or more aircraft in response to maintenance operations.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to illustrate various examples of the disclosure, the examples are by no means limiting and are exemplary. Many other examples will be apparent to those of skill in the art upon reviewing the above description. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope is defined by the claims, and can include other examples that occur to those skilled in the art.

## Claims

1. A system (100) comprising:
a maintenance coordination control unit (104), optionally a computer system comprising the maintenance coordination control unit (104), wherein the maintenance coordination control unit (104) configured to:
receive one or more health signals (118) from one or more health management sub-systems (112) of one or more aircraft (102), wherein the one or more health signals (118) include one or more tail assignments (122) and one or more maintenance issues for the one or more aircraft (102), and each tail assignment (122) combines the tail number for one of the aircraft (102) with a particular flight number; and
schedule (120) one or more maintenance operations for the one or more aircraft (102), wherein the one or more maintenance operations are configured to remedy the one or more maintenance issues.

2. The system (100) of claim 1, wherein the maintenance coordination control unit (104) is further configured to revise one or more tail assignments (122) of the one or more aircraft (102) to accommodate the one or more maintenance operations.

3. The system (100) of claim 1 or 2, wherein the one or more aircraft (102) include all of the aircraft (102) of an airline or all of the aircraft (102) of a plurality of airlines.

4. The system (100) of any preceding claim, further comprising:
a maintenance issue database (106) that stores data regarding the maintenance issues, wherein the maintenance coordination control unit (104) is in communication with the maintenance issue database (106); and/or
a tail assignment database (108) that stores tail assignments (122) for the one or more aircraft (102), wherein the maintenance coordination control unit (104) is in communication with the tail assignment database (108).

5. The system (100) of any preceding claim, wherein the one or more health management sub-systems (112) comprise one or more sensors (114) configured to monitor one or more aspects of one or more components (110) of the one or more aircraft (102).

6. The system (100) of any preceding claim, wherein the maintenance coordination control unit (104) is further configured to determine one or more costs for the one or more maintenance issues.

7. The system (100) of any preceding claim, wherein the maintenance coordination control unit (104) is an artificial intelligence or machine learning system (100).

8. A method, optionally a computer-implemented method, comprising:
receiving, by a maintenance coordination control unit (104), one or more health signals (118) from one or more health management sub-systems (112) of one or more aircraft (102), wherein the one or more health signals (118) include one or more tail assignments (122) and one or more maintenance issues for the one or more aircraft (102); and
scheduling, by the maintenance coordination control unit (104), one or more maintenance operations for the one or more aircraft (102), wherein the one or more maintenance operations are configured to remedy the one or more maintenance issues.

9. The method of claim 8, further comprising revising, by the maintenance coordination control unit (104), one or more tail assignments (122) of the one or more aircraft (102) to accommodate the one or more maintenance operations.

10. The method of claim 8 or 9, further comprising:
storing, in a maintenance issue database (106), data regarding the maintenance issues; and
communicatively coupling the maintenance coordination control unit (104) with the maintenance issue database (106); and/or
storing, in a tail assignment database (108), tail assignments (122) for the one or more aircraft (102), and communicatively coupling the maintenance coordination control unit (104) with the tail assignment database (108).

11. The method of any of claims 8 to 10, further comprising monitoring, by one or more sensors (114) of the one or more health management sub-systems (112), one or more aspects of one or more components (110) of the one or more aircraft (102).

12. The method of any of claims 8 to 11, further comprising operating the one or more aircraft (102) in response to said scheduling, optionally automatically operating the one or more aircraft (102) in response to said scheduling.

13. The method of any of claims 8 to 12, further comprising determining, by the maintenance coordination control unit (104), one or more costs for the one or more maintenance issues.

14. The method of any of claims 8 to 13, wherein the maintenance coordination control unit (104) is an artificial intelligence or machine learning system (100).

15. A computer program comprising computer-readable instructions that, when executed by a computer processor, cause the computer processor to perform the method of any of claims 8 to 14, or a non-transitory computer-readable storage medium having stored thereon such a computer program.
